# EUROPÄISCHE PATENTSCHRIFT

(11) **EP 3 175 577 B1**
(45) Veröffentlichungstag und Bekanntmachung des Hinweises auf die Patenterteilung: **23.09.2020**
(21) Anmeldenummer: 15738917.2
(22) Anmeldetag: 17.07.2015
(51) Int. Cl.: H04L 9/32, G06Q 20/38

(54) **VERFAHREN ZUR ERZEUGUNG EINER DIGITALEN SIGNATUR**
METHOD FOR PRODUCING A DIGITAL SIGNATURE
PROCÉDÉ PERMETTANT DE PRODUIRE UNE SIGNATURE NUMÉRIQUE

(30) Priorität: 31.07.2014 DE 102014110859
(43) Veröffentlichungstag der Anmeldung: 07.06.2017
(73) Patentinhaber: Bundesdruckerei GmbH, 10969 Berlin (DE)
(72) Erfinder: MORGNER, Frank, 15537 Grünheide (DE)
(74) Vertreter: Richardt Patentanwälte PartG mbB
(86) Internationale Anmeldenummer: PCT/EP2015/066459
(87) Internationale Veröffentlichungsnummer: WO 2016/016023

(56) Entgegenhaltungen:
- EP-A1- 1 056 014
- DE-A1- 10 233 297
- "Technical Guideline BSI Requirements for Smart Card Readers Supporting eID and eSign Based on Extended Access Control", , 22. März 2013 (2013-03-22), XP055201694, Gefunden im Internet: URL:https://www.bsi.bund.de/SharedDocs/Dow nloads/EN/BSI/Publications/TechGuidelines/ TR03119/BSI-TR-03119_V1_pdf.pdf;jsessionid =79CD8160ADF463A8659D2C22B25A88B1.2_cid359 ?__blob=publicationFile [gefunden am 2015-07-10]
- Bsi: "Technische Richtlinie TR-03117: eCards mit kontaktloser Schnittstelle als sichere Signaturerstelluingseinheit", , 1. Januar 2009 (2009-01-01), Seiten 1-43, XP055221635, Gefunden im Internet: URL:https://www.bsi.bund.de/SharedDocs/Dow nloads/DE/BSI/Publikationen/TechnischeRich tlinien/TR03117/BSI-TR-03117.pdf?__blob=pu blicationFile [gefunden am 2015-10-16]

## Beschreibung

### Technisches Feld

Die nachfolgenden Darstellungen betreffen das Gebiet der technischen Anwendungen digitaler Signaturen und insbesondere die Abwehr von Manipulationsversuchen.

### Stand der Technik

Aus dem Stand der Technik sind vielfältige Verfahren zur Erzeugung digitaler Signaturen bekannt. Grundlegende Aspekte digitaler Signaturen sind beispielsweise in dem Schriftwerk "Bruce Schneier: Applied Cryptography (1996) John Wiley & Sons" in Kapitel 2.6 dargestellt. Einen Standard für einen kryptografisch geschützten Nachrichtenaustausch definiert die Publikation "Internet Engineering Task Force: RFC 5652 - Cryptographic Message Syntax (2009)".

Die Druckschrift DE 102 33 297 A1 beschreibt eine Vorrichtung zur digitalen Signatur eines elektronischen Dokuments mittels einer vor Manipulationen geschützten, insbesondere portablen und kartenförmigen Signaturerstellungseinheit, die zum Zusammenwirken mit einer das zur Signatur vorgesehene elektronische Dokument anbietenden und zum Empfangen der digitalen Signatur ausgebildeten Datenverarbeitungseinrichtung vorgesehen ist und die zum Ablegen eines geheimen, zugriffsgeschützten privaten digitalen Signaturschlüssels ausgebildet ist, wobei durch Wirkung einer Signaturprozessoreinheit der Signaturerstellungseinheit die digitale Signatur auf der Basis einer für das elektronische Element charakteristischen Zeichenkette sowie des privaten digitalen Signaturschlüssels erzeugbar ist, wobei die Signaturerstellungseinheit eine dieser unmittelbar zugeordnete, von der Datenverarbeitungseinrichtung nicht beeinflussbare Ausgabeeinheit zum Ausgaben eines Ausgabesignals für einen Benutzer der Datenverarbeitungseinrichtung aufweist, der Signaturerstellungseinheit eine durch den Benutzer betätigbare Eingabeeinheit zugeordnet ist und die Signaturerstellungseinheit so ausgebildet ist, dass als Reaktion auf das Ausgabesignal eine Benutzereingabe in die Eingabeeinheit erfolgen muss, bevor die digitale Signatur erzeugt und/oder zur Datenverarbeitungseinrichtung übertragen wird.

Die Druckschrift EP 1 056 014 A1 beschreibt ein Computersystem, das einen vertrauenswürdigen Anzeigeprozessor verwendet, der einen vertrauenswürdigen Pro zessor und einen vertrauenswürdigen Speicher aufweist, welche physisch und funktional von dem Prozessor und dem Speicher des Computersystems verschieden sind. Der vertrauenswürdige Anzeigeprozessor ist immun gegen unbefugte Modifikation oder Inspektion von internen Daten. Der vertrauenswürdige Anzeigeprozessor interagiert mit der Smartcard eines Anwenders, um ein vertrauenswürdiges Bild oder Siegel zu extrahieren und anzuzeigen, eine digitale Signatur der Bitmap eines Dokumentenbildes zu erzeugen und den Videospeicher so zu steuern, dass andere Prozesse des Computersystems das Bild nicht untergraben können während der Unterzeichnung. Der Benutzer interagiert mit dem vertrauenswürdigen Anzeigeprozessor über einen vertrauenswürdigen Schalter.

Die sich aus einschlägigen gesetzlichen Vorschriften ergebenden Sicherheitspolitiken, engl. "security policies", für technische Realisierungen zur Erzeugung digitaler Signaturen mit Beweiswert, d.h. sog. qualifizierter digitaler Signaturen, stellt die Publikation "BSI TR-03114 Stapelsignatur mit dem Heilberufsausweis (2007)" in Kapitel 6.2 zusammen. Die darin erwähnte Sicherheitspolitik der "alleinigen Kontrolle" lässt einen Verbleib der zur digitalen Signatur erforderlichen kryptografischen Schlüssel auf dem Computer oder insbesondere einem Arbeitsplatzrechner nicht zu. Deshalb werden die kryptografischen Schlüssel häufig in externen Speichermedien und insbesondere im geschützten Speicher von Smartcards untergebracht. Der Einsatz von Smartcards erlaubt zudem, die Erzeugung der digitalen Signatur unter die Voraussetzung einer vorangehenden Authentifizierung des Benutzers zu stellen. Soweit dazu biometrische Daten und/oder Kennwörter des Benutzers an die Smartcard übertragen werden müssen, können mit manipulationsgeschützten Kartenlesegeräten viele Sicherheitsrisiken ausgeschlossen werden, die sich durch die Möglichkeit eines unbemerkten Fremdzugriffs auf den Computer oder dessen Manipulation ergeben. Hierzu wird auf die von der Vereinigung "Die Deutschen Kreditwirtschaft" herausgegebene ZKA-Spezifikation der Sicherheitsklassen von Kartenlesegeräten hingewiesen. Kartenlesegeräte der Sicherheitsklasse 3 sind mit einer numerischen Tastatur und einem Display ausgestattet und ermöglichen einen ausrei chenden Manipulationsschutz in typischen Online-Banking Anwendungen. Allerdings können diese Kartenlesegeräte nur begrenzt in anderen Anwendungen genutzt werden. Die Grenzen liegen dort, wo die Ausstattung des vorhandenen Displays die Sicherheitspolitik der "sicheren Anzeige" noch gewährleisten kann. Beispielsweise kann ein Kartenlesegerät mit einer einzeiligen Textanzeige diese "sichere Anzeige" nicht leisten, wenn die digitale Signatur auf einen damit nicht darstellbaren digitalen Inhalt wie insbesondere eine digital codierte fotografische Aufnahme oder ein als Audiosequenz gespeichertes Diktat bezogen sein soll. In einem solchen Fall kann der Benutzer nicht anhand der Ausgabe des manipulationsgeschützten Kartenlesegeräts nachvollziehen, dass die Signatur tatsächlich für den vorgesehenen digitalen Inhalt angelegt wird. Der Benutzer kann lediglich darauf vertrauen, dass der nach einer Inspektion auf dem vom Benutzer ausgewählte digitale Inhalt unverfälscht zur Signatur gelangt. Dieses Vertrauen ist allerdings nicht in jedem Fall begründet, wie zwischenzeitlich aufgezeigte Manipulationsszenarien zeigen. Diesbezüglich wird auf die Publikation "Alexander Koch: Ein Mittelsmannangriff auf ein digitales Signiergerät (2011) Christian-Albrechts-Universität zu Kiel" verwiesen.

### Aufgabe und prinzipielle Lösung

Die Aufgabe, auch mit einfach ausgestatteten Kartenlesegeräten eine hohe Sicherheit gegenüber den bekannten Manipulationsszenarien zu erreichen, findet im Stand der Technik bislang keine befriedigende Lösung. Dementsprechend stellt sich vorliegend die Aufgabe, verbesserte Ansätze zur Erzeugung digitaler Signaturen bereitzustellen, mit denen die vorangehend aufgezeigten Sicherheitsrisiken abgemildert werden können.

Diese Aufgabe wird unter einem ersten Aspekt durch das mit den Merkmalen des Anspruchs 1 ausgestattete grundlegende Verfahren zur Erzeugung einer digitalen Signatur gelöst.

Diese grundlegende Verfahren zur Erzeugung einer digitalen Signatur für einen digitalen Inhalt mittels eines Computers und einer damit zum Datenaustausch verbundenen vertrauenswürdigen Signaturhardware umfasst einen Schritt zum Erzeugen eines Message-Digests aus dem digitalen Inhalt durch eine auf dem Computer ausgeführte Anwendung und zum Erzeugen von deskriptiven Daten zu der digitalen Signatur. Weiterhin umfasst das grundlegende Verfahren einen Schritt zum Übermitteln des Message-Digests und der deskriptiven Daten an die vertrauenswürdige Signaturhardware. In einem weiteren Schritt des grundlegenden Verfahrens wird eine Darstellung der deskriptiven Daten auf einer Ausgabeeinrichtung der vertrauenswürdigen Signaturhardware ausgegeben. Bei der Ausgabeeinrichtung handelt es sich insbesondere um eine Mensch-Maschine-Schnittstelle (HMI), die eine menschlich wahrnehmbare Darstellung der deskriptiven Daten ausgibt. In einem weiteren Schritt des grundlegenden Verfahrens wird eine Benutzerinteraktion als Voraussetzung für die Fortsetzung des Verfahrens durchgeführt. Danach werden in einem weiteren Schritt des grundlegenden Verfahrens Signaturdaten aus dem Message-Digest und den deskriptiven Daten durch die vertrauenswürdige Signaturhardware erzeugt und von der vertrauenswürdigen Signaturhardware an den Computer und insbesondere die Anwendung übermittelt.

Dabei wird als "vertrauenswürdige Signaturhardware" jede mit einem Computer und insbesondere einem Arbeitsplatzrechner zum Datenaustausch verbindbare manipulationsgeschützte oder manipulationsertüchtigte Vorrichtung bezeichnet, die zur Durchführung einer Authentifizierung eines Benutzers, zur Ausgabe einer menschlich wahrnehmbaren Darstellung in Abhängigkeit zugeführter Daten und zur Erzeugung einer digitalen Signatur auf zugeführten Daten eingerichtet ist. Beispielsweise wird eine vertrauenswürdige Signaturhardware durch ein Kartenlesegerät der Sicherheitsklasse 3 mit einer persönlichen Signaturkarte realisiert. Die Verbindung des Kartenlesegeräts zu dem Computer kann in der bekannten Weise drahtgebunden oder drahtlos erfolgen. Beispielsweise kann zur Verbindung des Kartenlesegeräts mit einem Arbeitsplatzrechner eine drahtgebundene Verbindung über den sog. USB Anschluss gewählt werden, um eine eigene Leistungsversorgung der vertrauenswürdigen Signaturhardware zu erübrigen. Gleichermaßen kann die vertrauenswürdige Signaturhardware durch eine umfassend ausgerüstete Smartcard, Chipkarte oder ein allgemeines Hardwaretoken verwirklicht sein, das neben einer Implementierung der Signaturfunktion ein Display oder eine ähnliche Ausgabeeinrichtung für eine menschlich wahrnehmbare Darstellung von Daten sowie eine Schnittstelle zum unmittelbaren Datenaustausch mit dem Arbeitsplatzrechner verfügt.

Weiterhin wird als "digitaler Inhalt" jede hinsichtlich eines Verwendungskontexts strukturierte oder strukturierbare Zusammenstellung von digitalen Daten verstanden. Insbesondere kann ein digitaler Inhalt durch eine lineare Datei oder eine Zeile in einer Datenbanktabelle gegeben sein.

Weiterhin werden als "deskriptive Daten" digitale Daten zur Beschreibung eines Signaturzwecks oder einer objektiven oder subjektiven inhaltlichen Einordnung eines digitalen Inhalts bezeichnet. In technischer Hinsicht sind die deskriptiven Daten zumindest dadurch charakterisiert, dass deren menschlich wahrnehmbare Wiedergabe oder eine von mehreren möglichen menschlich wahrnehmbaren Wiedergaben mittels der Ausgabeeinrichtung der betreffenden vertrauenswürdigen Signaturhardware möglich ist. Insofern ist die Festlegung der deskriptiven Daten nicht absolut, sondern in Bezug auf die besondere technische Ausstattung der vertrauenswürdigen Signaturhardware zu verstehen. Beispielsweise können in einer vertrauenswürdigen Signaturhardware mit einer einzeiligen Blockmatrix-Textanzeige Folgen oder Muster aus Buchstaben, Ziffern oder einfachen Symbolen deskriptive Daten sein. Weist in einem anderen exemplarischen Fall die vertrauenswürdigen Signaturhardware einen Lautsprecher auf, können jedenfalls alle natürlich-sprachlichen Folgen aus Wörtern, Zahlen, Buchstaben, Ziffern und Symbolen sowie alle Arten von digital codierten Audiosequenzen deskriptive Daten sein.

Dabei wird weiterhin als "Message-Digest" ein typisch auf eine einheitliche Länge gekürzter digitaler Code bezeichnet, der für einen bestimmten digitalen Inhalt charakteristisch ist. Vorzugsweise wird der Message-Digest durch eine kryptografisch sichere Einwegfunktion erzeugt. Beispielsweise kann ein Message-Digest durch die aus dem Stand der Technik bekannten Algorithmen MD2, MD4, MD5 und der sog. "Secure Hash Algorithm (SHA)".

Weiterhin wird als "digitale Signatur" eines digitalen Inhalts eine darauf bezogene und davon abgeleitete Zusammenstellung digitaler Daten bezeichnet, aus der sich über ein kryptografisches Verfahren und einen besonderen kryptografischen Schlüssel auf den Ersteller schließen lässt. Diese Zusammenstellung digitaler Daten wird weiterhin als "Signaturdaten" bezeichnet.

Ein eventueller Vorteil des vorangehend definierten grundlegenden Verfahrens kann darin gesehen werden, dass auch bei Verwendung einer einfach ausgestatteten vertrauenswürdigen Signaturhardware in vielen Fällen eine Manipulation einer digitalen Signatur im Rahmen der Validierung, d.h. bei der nachträglichen Prüfung des Zusammenhangs zwischen dem digitalen Dokument und dem Ersteller der Signatur, erkennbar gemacht werden kann. Dies beruht darauf, dass der Benutzer mit den deskriptiven Daten dem digitalen Inhalt eine nicht unerkannt fälschbare Beschreibung des mit dem ursprünglich zur Signatur vorgesehenen digitalen Inhalt verfolgten Zwecks oder eine Angabe zu einer damit abgegebenen Erklärung hinzufügen kann. Selbst wenn durch eine Manipulation in der vorangehend beschriebenen Art die digitale Signatur nicht für den vom Benutzer vorgesehene digitale Inhalt sondern für einen anderen digitalen Inhalt erzeug wird, wird dessen digitale Signatur nur im Zusammenhang mit den vom Benutzer vor dem Erzeugen der Signaturdaten überprüften und als zutreffend bestätigten deskriptiven Daten gültig sein. Ein Angreifer kann die für den gefälschten digitalen Inhalt unzutreffende Beschreibung in den deskriptiven Daten also nicht entfernen, ohne die Gültigkeit der Signatur zu zerstören. Die in den deskriptiven Daten enthaltene Zweckangabe oder Absicht kann dem Benutzer später die Möglichkeit bieten, die an der Gültigkeit der digitalen Signatur anknüpfende Vermutung der Authentizität des digitalen Inhalts zu erschüttern. Alternativ oder zusätzlich bietet sich in Geschäftsbeziehungen die Möglichkeit, durch die Beschreibung eine Angabe zu übermitteln, deren inhaltliche Kompatibilität mit dem digitalen Inhalt vor der weiteren Bearbeitung automatisch oder manuell geprüft wird. Zweckmäßige Weiterbildungen und Ausgestaltungen des grundlegenden Verfahrens sind in den Ansprüchen 2 bis 12 angegeben. Ein weiterer eventueller Vorteil der Erfindung kann darin gesehen werden, dass die Signaturdaten eine unlösbare Verbindung zwischen dem Message-Digest und den deskriptiven Daten herstellen. Insbesondere ist es dadurch ausgeschlossen, eine Fälschung des Message-Digest oder der deskriptiven Daten durch eine isolierte Anpassung eines Teils der Signaturdaten unerkennbar zu machen.

Ein weiterer eventueller Vorteil der Erfindung kann darin gesehen werden, dass damit die als Grundlage für das Erzeugen der Signaturdaten erzeugte Verknüpfung das für die Anwendung der Signaturfunktion vorgesehene Format erhalten kann. Auf diese Art kann die in der vertrauenswürdigen Signaturhardware implementierte Signaturfunktion unverändert aus dem Stand der Technik übernommen werden.

In einer weiteren Ausgestaltung des vorangehend definierten Verfahrens werden zur Verknüpfung der deskriptiven Daten mit dem Message-Digest einerseits und zur Erzeugung des Message-Digests aus dem digitalen Inhalt andererseits identische Einwegfunktionen ausgeführt.

Ein eventueller Vorteil dieser Ausgestaltung kann darin gesehen werden, dass damit zur Verifikation der Signatur nur eine Implementierung genau dieser Einwegfunktion benötigt wird. Insbesondere kann die Einwegfunktion so festgelegt werden, dass damit jedenfalls einem bekannten Standard in Bezug auf die Erzeugung des Message-Digests entsprochen wird. Dadurch kann eine Rückwärtskompatibilität der vertrauenswürdigen Signaturhardware erreicht werden.

In einer weiteren Ausgestaltung eines der vorangehend definierten Verfahren wird die Benutzerinteraktion zur Freigabe der Erzeugung der Signaturdaten an einer Eingabeschnittstelle der vertrauenswürdigen Signaturhardware vorausgesetzt. Die Benutzerinteraktion kann in einer noch weitergehenden Ausgestaltung die Authentifizierung des Benutzers umfassen. Die Authentifizierung kann vorzugsweise die Eingabe eines Kennworts oder die Erfassung eines biometrischen Merkmals des Benutzers über eine Schnittstelle der vertrauenswürdigen Signaturhardware einschließen.

Dabei bezeichnet "Authentifizierung" jede technisch erfassbare Handlung eines Benutzers gegenüber der vertrauenswürdigen Signaturhardware, die mit Blick auf den verfolgten Zweck ein ausreichend vertrauenswürdiges Indiz hinsichtlich der Identität, Rolle oder Vertrauensstellung des Benutzers liefert. Beispielweise kann eine Authentifizierung in der vielfältig bekannten Weise durch Nachweis von Besitz und Wissen bewerkstelligt werden. Beispielsweise setzt der Zugriff auf ein Mobiltelefonnetz nicht nur den Besitz einer geeigneten SIM Karte voraus, sondern auch die Kenntnis der PIN zu deren Freischaltung. Alternativ oder kumulativ kann zum Zweck der "Authentifizierung" das maschinelle Erfassen eines biometrischen Merkmals des Benutzers einschließen.

Ein eventueller Vorteil dieser Ausgestaltung kann darin gesehen werden, dass die Freigabe des Benutzers nicht durch eine unerkannte Manipulation des Computers ersetzt werden kann. Damit ist insbesondere ausgeschlossen, dass eine durch Computerviren oder vergleichbare Schadsoftware veränderte Anwendung auf dem Computer ein angeschlossenes Kartenlesegerät verdeckt zur Erzeugung von Signaturen auf gefälschten digitalen Inhalten ansteuert. Andernfalls könnte beispielsweise ein Schadprogramm gefälschte Bestellungen mit der digitalen Signatur des Benutzers erstellen, sobald dieser die vertrauenswürdigen Signaturhardware an den Computer angeschlossen und sich dieser gegenüber authentifiziert hat.

In einer weiteren Ausgestaltung eines der vorangehend definierten Verfahren werden die deskriptiven Daten auf dem Computer in Abhängigkeit des digitalen Inhalts erzeugt. Insbesondere werden die deskriptiven Daten an einer vorbestimmten oder markierten Stelle aus dem digitalen Inhalt extrahiert. Beispielsweise können die deskriptiven Daten aus einem markierten Bereich eines XML codierten digitalen Inhalts oder aus den Metadaten von digitalen Inhalten im PDF, RTF, SVG Format entnommen werden.

Ein eventueller Vorteil dieser Ausgestaltung kann einmal darin gesehen werden, dass der Benutzer von der Eingabe oder der Auswahl der deskriptiven Daten entlastet wird. Zudem ermöglicht die automatische Extraktion der deskriptiven Daten aus dem digitalen Inhalt insbesondere in Geschäftsbeziehungen die Verwendung von vorbereiteten elektronischen Formularen, deren wesentlicher Inhalt durch die Anwendung in den deskriptiven Daten zusammengefasst und durch die Signatur des Benutzers bestätigt wird. Bei ausreichend klarer Zuordnung der deskriptiven Daten zu Empfänger und Vorgang erscheint eine Manipulation nahezu sicher ausgeschlossen. Insbesondere können die deskriptiven Daten vom Empfänger des digitalen Inhalts mit dem elektronischen Formular festgelegt werden, wodurch eine automatische Prüfung möglich wird.

In einer weiteren Ausgestaltung eines der vorangehend definierten Verfahren werden die deskriptiven Daten insgesamt oder zu einem Teil aus einer Benutzereingabe und insbesondere einer Texteingabe des Benutzers abgeleitet. Alternativ oder zusätzlich werden die deskriptiven Daten aus einer vom Benutzer gewählten Bildschirmansicht und/oder aus einer vom Benutzer gewählten Sprachwiedergabe des digitalen Inhalts abgeleitet.

Ein eventueller Vorteil dieser Ausgestaltung kann einmal darin gesehen werden, dass der Benutzer die deskriptiven Daten selbst festlegen kann. Soweit dabei die deskriptiven Daten aus menschlich wahrnehmbaren Wiedergaben des digitalen Inhalts abgeleitet werden, kann ein Vorteil darin gesehen werden, dass durch den Rückgriff auf den digitalen Inhalt die Erstellung der deskriptiven Daten erleichtert wird. Die kann insbesondere in der barrierefreien Realisierung ein besonderer Vorteil sein. Falls beispielsweise ein sehbeeinträchtigter Benutzer sich einen digitalen Inhalt von seinem Computer "vorlesen" lässt, wird er die Möglichkeit schätzen, durch einfache Eingabeoperationen einen Teil des Gehörten in die deskriptiven Daten zu übernehmen.

In einer weiteren Ausgestaltung eines der vorangehend definierten Verfahren werden die in den deskriptiven Daten enthaltene Texteingabe oder Bildschirmansicht auf einem Monitor der vertrauenswürdigen Signaturhardware angezeigt und/oder die darin enthaltene Texteingabe und/oder Sprachwiedergabe wird durch einen Lautsprecher der vertrauenswürdigen Signaturhardware wiedergegeben. Insbesondere wird eine in den deskriptiven Daten enthaltene Texteingabe durch die vertrauenswürdige Signaturhardware in einer synthetischen Sprachwiedergabe akustisch ausgegeben.

In einer weiteren Ausgestaltung eines der vorangehend definierten Verfahren werden die übermittelten Signaturdaten auf dem Computer und insbesondere von der Anwendung mit den deskriptiven Daten und dem digitalen Inhalt zu einem prüffähigen signierten digitalen Inhalt zusammengefasst.

Ein eventueller Vorteil dieser Ausgestaltung kann darin gesehen werden, dass damit alle in Bezug auf eine spätere Verifizierung der digitalen Signatur erforderlichen Daten zusammenhängend verwaltet werden können. Damit kann der Gefahr begegnet werden, dass aufgrund einer versehentlichen Löschung eines Teils der Daten die Verifizierung der digitalen Signatur unmöglich wird.

In einer weiteren Ausgestaltung eines der vorangehend definierten Verfahren wird weiterhin zur Verifizierung des prüffähigen signierten digitalen Inhalts die Gültigkeit der Signaturdaten in Bezug auf den Message-Digest des aus dem prüffähigen signierten digitalen Inhalts extrahierten digitalen Inhalts und in Bezug auf die aus dem prüffähigen signierten digitalen Inhalts extrahierten deskriptiven Daten geprüft.

Die eingangs angegebene Aufgabe wird unter einem zweiten Aspekt durch die mit den Merkmalen des Anspruchs 15 ausgestattete Datenverarbeitungseinrichtung und unter einem dritten Aspekt durch das mit den Merkmalen des Anspruchs 16 ausgestattete Computerprogramm gelöst.

### Beschreibung einer bevorzugten Durchführungsform

Eine exemplarische Durchführungsform zu den vorangehend definierten Verfahren wird nachfolgend mit Bezug auf die anhängende Zeichnung beschrieben. Darin zeigen:
- Fig. 1: eine schematische Darstellung eines exemplarischen Verfahrens zur Erzeugung einer digitalen Signatur mit deskriptiven Daten; und
- Fig. 2: eine schematische Darstellung einer exemplarischen Datenverarbeitungseinrichtung für die Ausführung des Verfahrens gemäß Fig. 1.

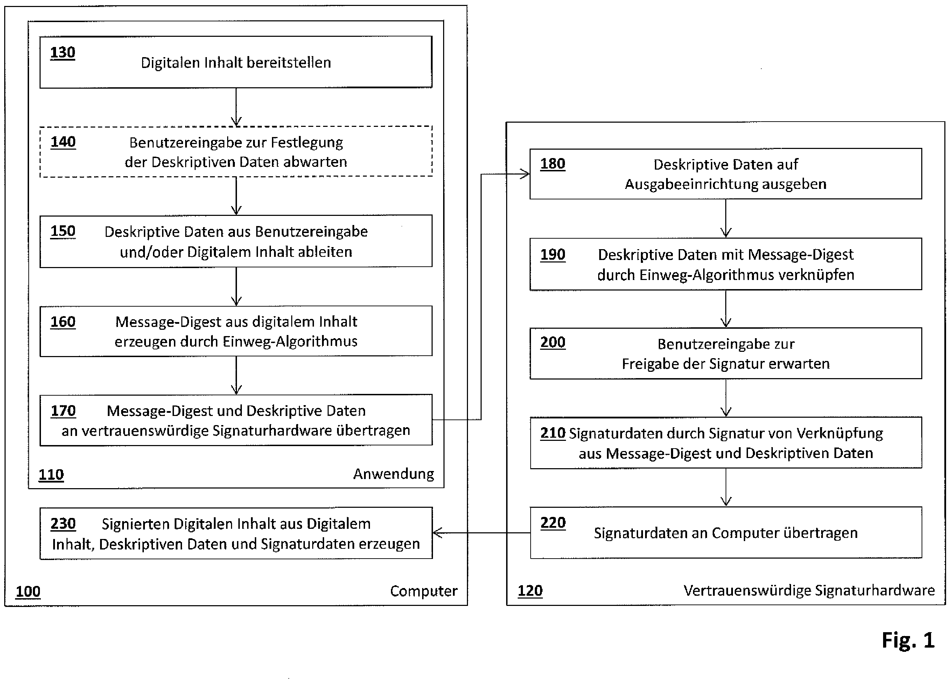

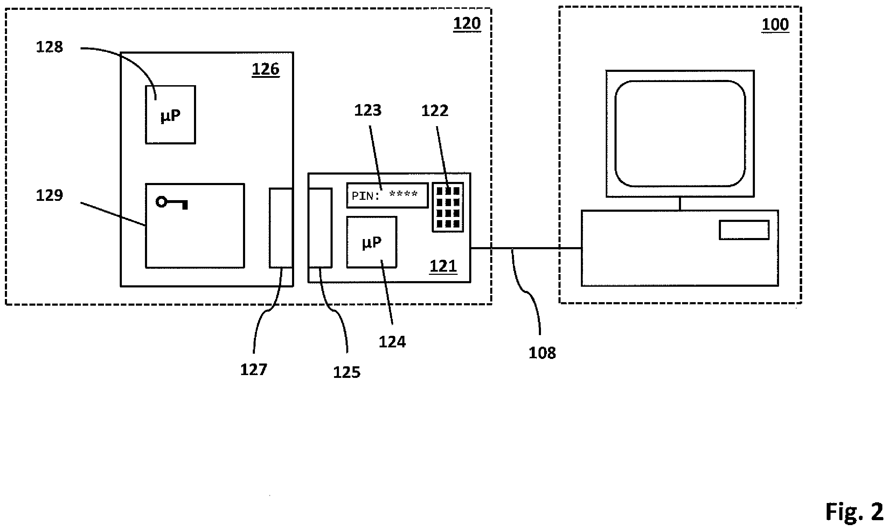

Das in der Fig. 1 veranschaulichte Verfahren zur Erzeugung einer digitalen Signatur geht von einer Datenverarbeitungseinrichtung gemäß Fig. 2 aus. Diese Datenverarbeitungseinrichtung umfasst einen Computer und insbesondere einen Arbeitsplatzrechner 100 sowie eine vertrauenswürdigen Signaturhardware 120, die über eine Datenverbindung 108 zum Austausch von Daten verbunden sind.

Der Computer 100 ist dazu eingerichtet, eine Anwendung 110 und insbesondere ein interaktives Programm auszuführen. Ferner umfasst der Computer 100 die typischen und aus dem Stand der Technik bekannten Ein- und Ausgabegeräte, die bis auf den Bildschirm 102 in der Skizze nicht dargestellt sind und deswegen nachfolgend kurz aufgezählt werden. Als verfügbare Eingabegeräte werden für die weiteren Erläuterungen jedenfalls eine Tastatur und ein Zeigegerät in der Art eines Touchpads oder einer Maus unterstellt. Zur Beschreibung besonderer Varianten des exemplarischen Verfahrens wird zudem die Verfügbarkeit von Sprach-Ein- und/oder -ausgabegeräten angenommen. Diese können insbesondere als Mikrofon und Lautsprecher ausgestaltet sein.

Die vertrauenswürdige Signaturhardware 120 umfasst in der exemplarischen Situation ein Kartenlesegerät 121 und eine damit zum Datenaustausch verbundene Smartcard 126.

Das exemplarisch dargestellte Kartenlesegerät 121 entspricht hinsichtlich seiner Ausstattung der Sicherheitsklasse 3 und umfasst dementsprechend ein einzeiliges Display 123 und eine numerischen Tastatur 122. Ferner hat das Kartenlesegerät 121 einen programmtechnisch eingerichteten Mikroprozessor 124 und eine Schnittstelle 125 zur Kommunikation mit der Smartcard 126. In einer einfachen Verwirklichung kann die Schnittstelle 125 des Kartenlesegeräts 121 ein Kontaktblock zur Kontaktierung eines Kontaktarrays der in eine Halterung eingesetzten Smartcard 126 sein. Diese Details sind aus dem Stand der Technik bekannt und in der Skizze dementsprechend nicht dargestellt. Die programmtechnische Einrichtung des Mikroprozessors 124 umfasst Codes zur Steuerung des Datenaustausches über die Schnittstelle 125 und die Datenverbindung 108, die Ansteuerung des Displays 123 und das Auslesen von Eingaben aus der Tastatur 122. Zudem umfasst die programmtechnische Einrichtung des Mikroprozessors 124 Codes mit Implementierungen von Algorithmen zur kryptografischen Datenverarbeitung. Weitergehende Einzelheiten dazu sind der nachfolgenden Darstellung des exemplarischen Verfahrens vorbehalten.

Die Smartcard 126 umfasst eine Schnittstelle 127 zum Datenaustausch mit dem Kartenlesegerät 121 über dessen korrespondierende Schnittstelle 125. Ferner hat die Smartcard einen Speicher 129, aus dem ein kryptografischer Schlüssel auslesbar ist. Der Lesevorgang ist allerdings nicht direkt über die Schnittstelle 127 möglich, sondern muss durch einen in der Smartcard 126 weiterhin vorgesehenen programmtechnisch eingerichteten Mikroprozessor 128 vermittelt werden. Dadurch kann das Auslesen des kryptografischen Schlüssels aus dem Speicher 128 unter den Vorbehalt einer vorangehenden Authentifizierung des Benutzers gestellt werden. Diese Authentifizierung wird in einer einfachen Realisierung als Abfrage einer PIN durchgeführt, die über die Tatstatur des Kartenlesegeräts 121 eingegeben und von dessen Mikroprozessor 124 über die betreffenden Schnittstellen 125, 127 an den Mikroprozessor 128 der Smartcard 126 übertragen wird.

Bei der Smartcard 126 kann es sich insbesondere um eine Signaturkarte oder ein gleichwertig ausgestattetes elektronisches Dokument wie bspw. einen elektronischen Personalausweis (ePA) handeln.

Das in Fig. 1 gezeigte exemplarische Verfahren wird in seinen ersten Schritten von einer auf dem Computer 100 ausgeführten Anwendung 110 verwirklicht. Die Anwendung 110 stellt in einem ersten Schritt des Verfahrens 130 den digitalen Inhalt bereit, für den die digitale Signatur erzeugt werden soll. Die Bereitstellung kann insbesondere das Laden des digitalen Inhalts von einem Speicherort umfassen. Der digitale Inhalt kann insbesondere auch durch die Anwendung 110 erstellt oder verändert werden. Insbesondere kann ein von einem Speicherort geladener digitaler Inhalt durch die Anwendung 110 über Bedienhandlungen des Benutzers verändert werden. Beispielsweise kann diese Art der Bereitstellung dadurch konkret verwirklicht werden, dass der Benutzer über einen Netzwerkzugriff ein vorbereitetes elektronisches Formular in die Anwendung 110 lädt und diesem digitalen Inhalt über eine anschließende Interaktion oder einen Dialog die vorgesehen besonderen Daten hinzufügt.

In einem weiteren fakultativen Schritt 140 kann die Anwendung 110 eine Benutzereingabe erwarten. Mit dieser Benutzereingabe kann der Benutzer eine Beschreibung der digitalen Signatur festlegen. Falls es sich bei dem Computer um einen gebräuchlichen Arbeitsplatzrechner handelt, kann die Benutzereingabe eine einfache Tastatureingabe sein. Alternativ kann der Benutzer auch über eine andere Eingabeschnittstelle des Computers, wie beispielsweise die Maus oder ein Zeigegerät, den Inhalt der deskriptiven Daten unmittelbar festlegen. Wiederum alternativ oder kumulativ kann der Benutzer durch die Auswahl einer Wiedergabe des digitalen Inhalts den Inhalt der deskriptiven Daten mittelbar festlegen. Insbesondere kann der Benutzer mit der Maus oder dem Zeigegerät einen Teil einer Bildschirmansicht zu dem digitalen Inhalt auswählen. Alternativ oder kumulativ kann der Benutzer über eine Eingabeschnittstelle einen Teil einer natürlich-sprachlichen Wiedergabe des digitalen Inhalts auswählen. In beiden Fällen kann die Anwendung dazu eingerichtet sein, die Beschreibung aus den Daten des digitalen Inhalts abzuleiten, die in der vom Benutzer durch die Eingabe bezeichnet wurden. Beispielsweise könnte der Benutzer in der Bildschirmansicht eines Textdokuments eine Zeile markieren, die dann von der Anwendung extrahiert und in die Beschreibung übernommen wird. Alternativ oder kumulativ könnte der Benutzer Zeitpunkte einer natürlich-sprachlichen Wiedergabe des digitalen Inhalts markieren, die den zu verwendenden Inhalt für Beschreibung der Signatur einschließen.

Die Anwendung 110 ist in der exemplarischen Situation ferner dazu eingerichtet, in einem weiteren Schritt des Verfahrens deskriptive Daten für die digitale Signatur abzuleiten. Diese deskriptiven Daten enthalten eine digitale Darstellung einer Beschreibung der Signatur. Soweit der vorangehend erläuterte Schritt 140 des Verfahrens mit der Benutzereingabe ausgeführt wurde, kann die Anwendung 110 die deskriptiven Daten aus der damit festgelegten Beschreibung ableiten. Andernfalls oder wenn mehr als die vom Benutzer festgelegte Beschreibung benötigt wird, muss die Anwendung 110 die (zusätzlichen) deskriptiven Daten aus einer anderen Quelle ableiten. Insbesondere bietet es sich an, die deskriptiven Daten direkt aus dem digitalen Inhalt abzuleiten. Dies erscheint dann besonders zweckmäßig, wenn der digitale Inhalt beschreibende Textdaten enthält, die als solche über eine bekannte digitale Zugriffstruktur zugänglich sind. Ein Beispiel für solche beschreibenden Textdaten sind die sog. Metadaten, die vielen digitalen Datenformaten vorgesehen sind.

In einem weiteren Schritt 150 des exemplarischen Verfahrens erzeugt die Anwendung 110 einen Message-Digest aus dem digitalen Inhalt. Dazu kann in einer besonderen Ausgestaltung ein Einweg-Algorithmus auf die Daten des digitalen Inhalts angewandt werden. Bei der Einweg-Funktion kann es sich um eine der gebräuchlichen Hashfunktionen handeln. Der Algorithmus zur Erzeugung des Message-Digests kann für typische Anwendungen unverändert aus dem Stand der Technik übernommen werden und wird deshalb nicht weiter dargestellt. Der Message-Digest wird anschließend zusammen mit den deskriptiven Daten in einem weiteren Schritt 170 durch die Anwendung 110 vom Computer 100 an die vertrauenswürdige Signaturhardware 120 über die eingangs erwähnte Datenverbindung übertragen.

Der nachfolgende Schritt 180 des Verfahrens wird durch die vertrauenswürdigen Signaturhardware 120 ausgeführt und umfasst die Ausgabe der deskriptiven Daten in einer menschlich wahrnehmbaren Darstellung über eine Ausgabeeinrichtung der vertrauenswürdigen Signaturhardware 120. In der exemplarischen Situation wird insbesondere auf dem Display 123 des Kartenlesegeräts 121 die mit den deskriptiven Daten festgelegte Zeichenkette angezeigt. Da diese Anzeige ausschließlich von den an die vertrauenswürdigen Signaturhardware 120 übermittelten deskriptiven Daten abhängt und kann nicht über die Datenleitung durch eine Schadanwendung auf dem Computer 100 beeinflusst werden. Deswegen darf der Benutzer darauf vertrauen, dass die bei Fortsetzung des Ablaufs erzeugte digitale Signatur jedenfalls die angezeigten deskriptiven Daten betrifft und nicht mit anderen Daten validiert. In einer besonderen Ausgestaltung könnten die vertrauenswürdigen Signaturhardware 120 und insbesondere das Kartenlesegerät 121 mit einem Lautsprecher für die Ausgabe einer gesprochenen natürlich-sprachlichen Darstellung der festgelegten Zeichenkette ausgestattet sein. In diesem Fall müsste aus Sicherheitsgründen die synthetische Spracherzeugung durch die vertrauenswürdige Signaturhardware bewerkstelligt werden. Eine synthetische Spracherzeugung auf dem Computer und die Übertragung der Sprache in einem Audioformat an die vertrauenswürdigen Signaturhardware wären der Manipulation zugänglich.

In einem weiteren Schritt 190 des exemplarischen Verfahrens werden die deskriptiven Daten mit dem Message-Digest durch einen von der vertrauenswürdigen Signaturhardware 120 ausgeführten Einweg-Algorithmus verknüpft. Zweckmäßig weist das Ergebnis der Verknüpfung die Datenlänge auf, die durch den Signaturalgorithmus direkt verarbeitet werden kann. Insofern kann ein besondere Realisierung die Verknüpfung dadurch bilden, dass zunächst über einen weiteren Einweg-Algorithmus aus den deskriptiven Daten ein Hashwert mit der Länge des Message-Digest abgeleitet wird und daraus durch eine exklusive-oder (XOR) Operation mit dem Message-Digest das gewünschte Resultat abgeleitet wird. Die exklusive-oder (XOR) Operation ist an dieser Stelle deswegen prädestiniert, weil deren Resultat in jeder Binärstelle von den betreffenden Binärstellen der Operanden abhängt. Dadurch wird erreicht, dass bereits die Verknüpfung aus den deskriptiven Daten und dem Message-Digest nicht mehr zerlegbar ist. Unabhängig von der Art der Erzeugung der Signaturdaten ist damit eine Fälschung durch blockweises Zusammensetzen von digitalem Inhalt, deskriptiven Daten und den jeweils gültigen Teilen der Signaturdaten ausgeschlossen. Dies kann dann vorteilhaft sein, wenn die Signaturdaten durch einen symmetrischen Algorithmus im sog. "Electronic Code Book" (ECB) Modus erzeugt werden. Alternativ und unter diesem Gesichtspunkt gleichwertig könnte der zur Erzeugung des Message-Digests in dem vorangehenden Schritt 160 verwendete Einweg-Algorithmus auf eine lineare Verkettung des Message-Digest und der deskriptiven Daten angewendet werden. In beiden Fällen weist das Resultat vorteilhaft eine Datenlänge auf, die der des Message-Digests entspricht. Damit kann dieses Resultat unmittelbar durch eine auf den Message-Digest zugeschnittenen Signaturalgorithmus verarbeitet werden.

In einem weiteren Schritt 200 des exemplarischen Verfahrens erwartet die vertrauenswürdigen Signaturhardware 120 eine Benutzereingabe als Anzeichen für die Absicht des Benutzers, die digitale Signatur mit den deskriptiven Daten entsprechend der vorangehend ausgegebenen Darstellung zu erzeugen. In der exemplarischen Situation kann die Benutzereingabe durch einen Tastendruck auf der Tastatur der vertrauenswürdigen Signaturhardware 120 verwirklicht werden. In einer verbesserten Ausgestaltung könnte zur Vermeidung versehentlicher Fehlbedienungen vorgesehen sein, dass der Benutzer eine auf dem Display der vertrauenswürdigen Signaturhardware 120 angezeigte Ziffernfolge über deren Tastatur eingibt. In diesem Fall kann der Anzeige der Ziffernfolge ein entsprechender Hinweis über die Bedeutung der Eingabe vorangestellt werden, der vom Benutzer dann regelmäßig beachtet werden dürfte. Dadurch kann insbesondere das Risiko einer manipulierten Anleitung des Benutzers über die von der Anwendung auf dem Computer erzeugte Ausgabe abgemildert werden. Grundsätzlich ist an dieser Stelle erkennbar, dass die Sicherheit des Verfahrens davon profitiert, wenn die Interaktion mit dem Benutzer bei der Freigabe der Signatur auf die vertrauenswürdige Signaturhardware beschränkt wird.

Nach der Freigabe werden in einem weiteren Schritt 210 des exemplarischen Verfahrens die Signaturdaten durch Anwendung eines Signaturalgorithmus auf das Resultat der Verknüpfung von Message-Digest und deskriptiven Daten erzeugt. Diese Signaturdaten werden in einem weiteren Schritt 220 des exemplarischen Verfahrens von der vertrauenswürdigen Signaturhardware 120 an den Computer 100 übertragen. Wie in der exemplarischen Situation angedeutet ist, muss das Ziel dieser Übertragung nicht in jedem Fall die Anwendung 110 sein. Grundsätzlich ist eine getrennte Handhabung des digitalen Inhalts, der deskriptiven Daten und der darauf bezogenen Signaturdaten möglich. Dementsprechend könnte ein Benutzer zunächst den digitalen Inhalt weitergeben, und erst später die Signaturdaten und die zur Validierung der Signaturdaten erforderlichen deskriptiven Daten "nachliefern". Allerdings setzt dieses Vorgehen voraus, dass die Information über den Zusammenhang zwischen dem digitalen Inhalt, den deskriptiven Daten und den Signaturdaten nicht verloren geht. Vor diesem Hintergrund könnte die Anwendung ausgestaltet sein, diese Information zu verwalten. Alternativ könnte die Anwendung 110 ausgestaltet sein, die von der vertrauenswürdigen Signaturhardware empfangenen Signaturdaten mit den deskriptiven Daten und dem digitalen Inhalt zu einem Datenaggregat zusammen zu fassen, das als Signierter Digitaler Inhalt bezeichnet werden könnte. Diese Zusammenfassung könnte beispielsweise in der Art einer strukturierbaren oder strukturierten linearen Datei erzeugt werden, insbesondere als Datei in einem Markup- oder in einem Archivformat. In der exemplarischen Durchführungsform des Verfahrens wird der Signierte Digitale Inhalt durch eine andere, nicht bezeichnete Anwendung auf dem Computer in einem Schritt 230 erzeugt.

Die Validierung der Signaturdaten ist entsprechend der Konstruktion des Verfahrens nicht ohne die ursprünglichen deskriptiven Daten möglich. An die Stelle des Message-Digest, der in den bekannten Verfahren mit dem Ergebnis der kryptografischen Umkehrung des Signaturalgorithmus auf den zu prüfenden Signaturdaten unter Verwendung des Prüfschlüssels entspricht, tritt vorliegend das Resultat der Verknüpfung aus Message-Digest und deskriptiven Daten, das im vorangehend beschriebenen Schritt 210 des exemplarischen Verfahrens der Erzeugung der Signaturdaten zugrunde gelegt wurde.

### Bezugszeichenliste

- 100: Computer
- 108: Datenverbindung
- 110: Anwendung
- 120: Vertrauenswürdige Signaturhardware
- 121: Kartenlesegerät
- 122: Tastatur
- 123: Display
- 124: Mikroprozessor
- 125: Schnittstelle
- 126: Signaturkarte
- 127: Schnittstelle
- 128: Mikroprozessor
- 129: Speicher
- 130-230: Verfahrensschritte

## Patentansprüche

1. Verfahren zur Erzeugung einer digitalen Signatur für einen digitalen Inhalt mittels eines Computers (100) und einer damit zum Datenaustausch verbundenen vertrauenswürdigen Signaturhardware (120) durch:
- Erzeugen (160) eines Message-Digests aus dem digitalen Inhalt durch eine auf dem Computer (100) ausgeführte Anwendung (110) und eine Einwegfunktion;
- Erzeugen (150) von deskriptiven Daten zu der digitalen Signatur;
- Übermitteln (170) des Message-Digests und der deskriptiven Daten an die vertrauenswürdige Signaturhardware (120);
- Ausgeben (180) der deskriptiven Daten auf einer Ausgabeeinrichtung der vertrauenswürdigen Signaturhardware (120);
- Durchführen (200) einer Benutzerinteraktion als Voraussetzung für die Fortsetzung des Verfahrens;
- Erzeugen (210) von Signaturdaten aus dem Message-Digest und den deskriptiven Daten durch die vertrauenswürdige Signaturhardware (120), worin zumindest ein Teil der Signaturdaten sowohl vom Message-Digest als auch von den deskriptiven Daten abhängt, worin die Signaturdaten aus einer Verknüpfung des Message-Digests mit den deskriptiven Daten abgeleitet werden, die die Ausführung (190) einer Einwegfunktion auf die deskriptiven Daten und den Message-Digest umfasst; und
- Übermitteln der Signaturdaten von der vertrauenswürdigen Signaturhardware (120) an den Computer (100) und insbesondere die Anwendung (110).

2. Verfahren nach Anspruch 1, worin zur Verknüpfung der deskriptiven Daten mit dem Message-Digest einerseits und zur Erzeugung des Message-Digests aus dem digitalen Inhalt andererseits identische Einwegfunktionen ausgeführt werden.

3. Verfahren nach einem der vorangehenden Ansprüche, worin die Benutzerinteraktion an einer Eingabeschnittstelle der vertrauenswürdigen Signaturhardware (120) durchgeführt wird.

4. Verfahren nach Anspruch 4, worin die Benutzerinteraktion die Authentifizierung des Benutzers gegenüber der vertrauenswürdigen Signaturhardware (120) umfasst.

5. Verfahren nach Anspruch 4, worin die Authentifizierung die Eingabe eines Kennworts oder die Erfassung eines biometrischen Merkmals des Benutzers über eine Schnittstelle der vertrauenswürdigen Signaturhardware (120) umfasst.

6. Verfahren nach einem der vorangehenden Ansprüche, worin die deskriptiven Daten auf dem Computer in Abhängigkeit des digitalen Inhalts erzeugt werden.

7. Verfahren nach Anspruch 6, worin die deskriptiven Daten an einer vorbestimmten oder markierten Stelle aus dem digitalen Inhalt extrahiert werden.

8. Verfahren nach Anspruch 6, worin die deskriptiven Daten aus einer Benutzereingabe und insbesondere einer Texteingabe des Benutzers, aus einer vom Benutzer gewählten Bildschirmansicht und/oder aus einer vom Benutzer gewählten Sprachwiedergabe des digitalen Inhalts abgeleitet werden.

9. Verfahren nach Anspruch 8, worin die in den deskriptiven Daten enthaltene Texteingabe oder Bildschirmansicht auf einem Display (123) oder Monitor der vertrauenswürdigen Signaturhardware (120) angezeigt und/oder die darin enthaltene Texteingabe und/oder Sprachwiedergabe durch einen Lautsprecher der vertrauenswürdigen Signaturhardware (120) wiedergegeben wird.

10. Verfahren nach Anspruch 9, worin die in den deskriptiven Daten enthaltene Texteingabe durch die vertrauenswürdige Signaturhardware (120) in einer synthetischen Sprachwiedergabe akustisch ausgegeben wird.

11. Verfahren nach einem der vorangehenden Ansprüche, worin die übermittelten Signaturdaten auf dem Computer (100) und insbesondere von der Anwendung (110) mit den deskriptiven Daten und dem digitalen Inhalt zu einem prüffähigen signierten digitalen Inhalt zusammengefasst werden.

12. Verfahren nach einem der vorangehenden Ansprüche, worin weiterhin zur Verifizierung des prüffähigen signierten digitalen Inhalts die Gültigkeit der Signaturdaten in Bezug auf den Message-Digest des digitalen Inhalts und in Bezug auf die deskriptiven Daten geprüft wird.

13. Datenverarbeitungseinrichtung, die einen Computer (100) und eine damit zum Datenaustausch verbundenen vertrauenswürdigen Signaturhardware (120) umfasst und zur Durchführung eines Verfahrens nach einem der Ansprüche 1 bis 12 eingerichtet ist.

14. Computerprogrammprodukt, insbesondere digitales Speichermedium mit digital codierten Instruktionen, durch deren Ausführung auf einer Datenverarbeitungseinrichtung mit einem Computer (100) und einer damit zum Datenaustausch verbundenen vertrauenswürdigen Signaturhardware (120) das Verfahren gemäß einem der Ansprüche 1 bis 12 durchgeführt wird.

## Claims

1. A method for generating a digital signature for a digital content by means of a computer (100) and a trustworthy signature hardware (120) connected thereto for data exchange by:
- generating (160) a message digest from the digital content by an application (110) executed on the computer and a one-way function;
- generating (150) descriptive data relating to the digital signature;
- transmitting (170) the message digest and the descriptive data to the trustworthy signature hardware (120);
- outputting (180) the descriptive data at an output device of the trustworthy signature hardware (120);
- carrying out (200) a user interaction as precondition for the continuation of the method;
- generating (210) signature data from the message digest and the descriptive data by the trustworthy signature hardware (120), in which at least a part of the signature data is dependent both on the message digest and on the descriptive data, wherein the signature data are derived from a linking of the message digest and the descriptive data, which linking comprises the execution (190) of a one-way function on the descriptive data and the message digest; and
- transmitting the signature data from the trustworthy signature hardware (120) to the computer (100) and in particular the application (110).

2. The method according to claim 1, wherein identical one-way functions are executed in order to link the descriptive data and the message digest on the one hand and in order to produce the message digest from the digital content on the other hand.

3. The method according to either one of the preceding claims, wherein the user interaction is carried out at an input interface of the trustworthy signature hardware (120).

4. The method according to claim 4, wherein the user interaction includes the authentication of the user to the trustworthy signature hardware (120).

5. The method according to claim 4, wherein the authentication comprises the input of a password or the capture of a biometric feature of the user via an interface of the trustworthy signature hardware (120).

6. The method according to any one of the preceding claims, wherein the descriptive data are generated on the computer depending on the digital content.

7. The method according to claim 6, wherein the descriptive data are extracted from the digital content at a predetermined or marked point.

8. The method according to claim 6, wherein the descriptive data are derived from a user input and in particular a text input of the user, from a screen view selected by the user and/or from a speech reproduction of the digital content selected by the user.

9. The method according to claim 8, wherein the text input or screen view contained in the descriptive data is displayed on a display (123) or monitor of the trustworthy signature hardware (120) and/or the text input and/or speech reproduction contained therein is played back by a loudspeaker of the trustworthy signature hardware (120).

10. The method according to claim 9, wherein the text input contained in the descriptive data is acoustically output by the trustworthy signature hardware (120) in a synthetic speech reproduction.

11. The method according to any one of the preceding claims, wherein the transmitted signature data are combined on the computer (100) and in particular by the application (110) with the descriptive data and the digital content to form a verifiable, signed digital content.

12. The method according to any one of the preceding claims, wherein the validity of the signature data in relation to the message digest of the digital content and in relation to the descriptive data is also checked in order to verify the verifiable, signed digital content.

13. A data processing device which comprises a computer (100) and a trustworthy signature hardware (120) connected thereto for data exchange and which is designed to carry out a method according to any one of claims 1 to 12.

14. A computer program product, in particular a digital storage medium with digitally coded instructions, the execution of which on a data processing device comprising a computer (100) and a trustworthy signature hardware (120) connected thereto for data exchange results in the method according to any one of claims 1 to 12 being carried out.

## Revendications

1. Procédé de création d'une signature numérique pour un contenu numérique au moyen d'un ordinateur (100) et d'un matériel de signature (120) fiable lui étant relié pour l'échange de données, par :
- la création (160) d'un condensé de message, message-digest, à partir d'un contenu numérique par une application (110) exécutée sur un ordinateur (100) et une fonction unidirectionnelle ;
- la création (150) de données descriptives relatives à la signature numérique ;
- la transmission (170) du message-digest et des données descriptives au matériel de signature (120) fiable ;
- l'édition (180) des données descriptives sur un dispositif d'édition du matériel de signature (120) fiable ;
- l'exécution (200) d'une interaction d'utilisateur en tant que condition préalable pour la poursuite du procédé ;
- la création (210) de données de signature à partir du message-digest et des données descriptives par le matériel de signature (120) fiable, où au moins une partie des données de signature dépend à la fois du message-digest et des données descriptives, où les données de signature sont dérivées d'une association du message-digest avec les données descriptives qui sont comprises dans l'exécution (190) d'une fonction unidirectionnelle appliquée aux données descriptives et au message-digest ; et
- la transmission des données de signature du matériel de signature (120) fiable vers l'ordinateur (100) et en particulier l'application (110).

2. Procédé selon la revendication 1, dans lequel, pour l'association des données descriptives avec le message-digest d'une part et pour la création du message-digest à partir du contenu numérique, d'autre part, des fonctions unidirectionnelles identiques sont exécutées.

3. Procédé selon l'une des revendications précédentes, dans lequel l'interaction d'utilisateur est exécutée au niveau d'une interface d'entrée du matériel de signature (120) fiable.

4. Procédé selon la revendication 4, dans lequel l'interaction d'utilisateur comprend l'authentification de l'utilisateur vis-à-vis du matériel de signature (120) fiable.

5. Procédé selon la revendication 4, dans lequel l'authentification comprend l'entrée d'un identifiant ou la détection d'une caractéristique biométrique de l'utilisateur par le biais d'une interface du matériel de signature (120) fiable.

6. Procédé selon l'une des revendications précédentes, dans lequel les données descriptives sont créées sur l'ordinateur en fonction du contenu numérique.

7. Procédé selon la revendication 6, dans lequel les données descriptives sont extraites à partir du contenu numérique à un endroit prédéterminé ou marqué.

8. Procédé selon la revendication 6, dans lequel les données descriptives sont dérivées à partir d'une entrée d'utilisateur et en particulier d'une entrée de texte de l'utilisateur, à partir d'une capture d'écran choisie par l'utilisateur et/ou à partir d'une restitution parlée du contenu numérique choisie par l'utilisateur.

9. Procédé selon la revendication 8, dans lequel l'entrée de texte ou la capture d'écran contenues dans les données descriptives sont affichées sur un affichage (123) ou sur un moniteur du matériel de signature (120) fiable, et/ou l'entrée de texte et/ou la restitution vocale y étant contenues sont rapportées par un haut-parleur du matériel de signature (120) fiable.

10. Procédé selon la revendication 9, dans lequel l'entrée de texte contenue dans les données descriptives est émise de manière acoustique dans une restitution vocale synthétique par le matériel de signature (120) fiable.

11. Procédé selon l'une des revendications précédentes, dans lequel les données de signature transmises sont résumées avec sur l'ordinateur (100) et en particulier par l'application (110) avec les données descriptives et le contenu numérique, sous la forme d'un contenu numérique signé prêt à être vérifié.

12. Procédé selon l'une des revendications précédentes, dans lequel, en outre, pour la vérification du contenu numérique signé prêt à être vérifié, on vérifie la validité des données de signature en ce qui concerne le message-digest du contenu numérique et en ce qui concerne les données descriptives.

13. Dispositif de traitement de données qui comprend un ordinateur (100) et un matériel de signature (120) fiable relié avec celui-ci pour l'échange de données et qui est conçu pour l'exécution d'un procédé selon l'une des revendications 1 à 12.

14. Produit-programme informatique, notamment support de stockage numérique avec des instructions numériquement codées, dont l'exécution sur un dispositif de traitement de données avec un ordinateur (100) et un matériel de signature (120) fiable relié avec celui-ci pour l'échange de données exécute le procédé selon l'une des revendications 1 à 12.
